# EUROPÄISCHE PATENTANMELDUNG

(11) **EP 4 124 270 A1**
(43) Veröffentlichungstag der Anmeldung: **01.02.2023**
(21) Anmeldenummer: 22184864.1
(22) Anmeldetag: 14.07.2022
(51) Int. Cl.: A47J 31/60

(54) **FILTEREINHEIT, FLÜSSIGKEITSTANK UND VERFAHREN ZUM HERSTELLEN EINER FILTEREINHEIT**

(30) Priorität: 28.07.2021 BE 202105597
(71) Anmelder: Miele & Cie. KG, 33332 Gütersloh (DE)
(72) Erfinder: Günter, Anna, 59557 Lippstadt (DE)

(57) **Zusammenfassung**

Die Erfindung betrifft eine Filtereinheit (110) zum Einsetzen in eine Aussparung eines Flüssigkeitstanks (105), wobei die Filtereinheit (110) ein Filterelement (500) und einen in dem Filterelement (500) zumindest teilweise labyrinthförmig oder mäanderförmig eingebetteten Kanal (400) zum Leiten einer Flüssigkeit durch die Filtereinheit (110) aufweist.

## Beschreibung

Die Erfindung betrifft eine Filtereinheit, einen Flüssigkeitstank und ein Verfahren zum Herstellen einer Filtereinheit gemäß den Hauptansprüchen.

Filtereinheiten in Kaffeevollautomaten werden durch den Benutzer in den Flüssigkeitstank des Gerätes eingesetzt. Derzeit werden nur Wasserfilterkartuschen für eine senkrechte Andockung im Flüssigkeitstank des Kaffeeautomaten angeboten. Diese könnten zwar prinzipiell auch in Flüssigkeitstanks mit horizontaler Andockung eingesetzt werden, allerdings ist hier mit diversen Nachteilen, die z. B. die Füllstandsanzeige, die Performance oder das Handling betreffen, zu rechnen.

Die DE 10 2008 010 914 A1 offenbart eine Getränkemaschine mit einem Flüssigkeitstank und einer Wasserfilterkartusche zum Entkalken oder Demineralisieren von Leitungswasser. Die WO 2008/017492 A2 offenbart einen Flüssigkeitstank eines Getränkeautomaten hervor, in den ein Wasserfilter eingesetzt ist. Die Anschlusskupplungen befinden sich innerhalb des Tanks.

Der Erfindung stellt sich die Aufgabe eine verbesserte Filtereinheit, einen verbesserten Flüssigkeitstank und ein verbessertes Verfahren zum Herstellen einer Filtereinheit zu schaffen.

Erfindungsgemäß wird diese Aufgabe durch eine Filtereinheit, einen Flüssigkeitstank und ein Verfahren zum Herstellen einer Filtereinheit mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass eine Filtereinheit geschaffen wird, die einen teilweise labyrinthförmigen oder mäanderförmigen Wasserweg aufweist, sodass die Filtereinheit sowohl horizontal als auch vertikal in einen Flüssigkeitstank eines Getränkezubereitungsgerätes eingesetzt werden kann.

Die vorliegende Erfindung schafft eine Filtereinheit zum Einsetzen in eine Aussparung eines Flüssigkeitstanks, wobei die Filtereinheit ein Filterelement und einen in dem Filterelement zumindest teilweise labyrinthförmig oder mäanderförmig eingebetteten Kanal zum Leiten einer Flüssigkeit durch die Filtereinheit aufweist.

Unter einer Filtereinheit kann ein Wasserfilter verstanden werden, der Substanzen aus dem Wasser, beispielsweise Kalk, filtern kann. Dazu kann die Filtereinheit in einen Flüssigkeitstank eingesetzt werden. Unter einem Flüssigkeitstank kann ein Tank zur Bevorratung einer Flüssigkeit verstanden werden. Bei der Flüssigkeit kann es sich um Wasser handeln, das für eine Getränkezubereitung vorgesehen ist. Der Flüssigkeitstank kann als Teil eines Getränkezubereitungsgerätes, wie beispielsweise einer Kaffeemaschine, verwendbar sein. Um die Flüssigkeit, hier beispielsweise das Wasser, aus dem Flüssigkeitstank vor einer Getränkezubereitung zu filtern, kann der Flüssigkeitstank eine Aussparung zur Aufnahme einer Filtereinheit aufweisen. Unter einem Filterelement kann ein Element zum Filtern verstanden werden, dass sich in der Filtereinheit befinden kann. Dabei kann ein Kanal in dem Filterelement eingebettet sein, durch den die zu filternde Flüssigkeit geleitet wird.

Beispielsweise werden hochragende Filtereinheiten mit einer kreisförmigen oder elliptischen Grundfläche eingesetzt. Die mechanische Schnittstelle der Filtereinheit ist entweder als Bajonett, Verrastung, Presspassung, o.ä. realisiert. In allen Fällen wird die Filtereinheit von oben in den Flüssigkeitstank eingeführt und auf das Wasserventil aufgesteckt. Eine mögliche Entwicklung ist eine Optimierung der Baugröße der Filtereinheit mit dem Ziel diese kleiner zu gestalten, um weniger Volumen innerhalb des Flüssigkeitstanks in Anspruch nehmen zu müssen.

Der hier vorgestellte Ansatz, der auch als Wasserfilter für einen horizontalen und vertikalen Einsatz in einem Flüssigkeitstank bezeichnet oder eingesetzt werden kann, ermöglicht eine senkrechte und waagerechte Andockung der Filtereinheit in einen Flüssigkeitstank. Durch eine kompakte Größe der Filtereinheit sowie durch einen vorhandenen erforderlichen Bauraum innerhalb des Flüssigkeitstanks ist es möglich, diese Filtereinheit in Flüssigkeitstanks mit einer waagerechten Andockung zu verbauen. Aufgrund der vorteilhaften Bauart der Filtereinheit liegt der Kanaleinlass der Filtereinheit beim Einsatz in einem Flüssigkeitstank mit horizontaler Andockung unterhalb des Flüssigkeits- bzw. Wasserpegels. Dadurch saugt die Pumpe Flüssigkeit bzw. Wasser statt Luft an. Das Vorhandensein oder das Fehlen der Filtereinheit wird erkannt und der jeweils erforderliche Mindestflüssigkeitsfüllstand bzw. Mindestwasserfüllstand wird wiedergeben. Der Wasserfilter besteht nicht aus mehreren Filterkammern sondern einem einzigen Wasserweg-Kanal. Wasserfilter, die üblicherweise für die senkrechte Andockung genutzt werden und aus mehreren Filterkammern bestehen, haben den Nachteil, dass bei deren Einsatz in Wassertanks mit horizontaler Andockung ggf. einige Kammern nicht ausreichend mit Flüssigkeit durchflutet werden können und dadurch die Filterleistung abnimmt. Der hier vorgestellte Ansatz ermöglicht einen Einbau der Filtereinheit per Hand in den Flüssigkeitstank. Wird die Filtereinheit in einer horizontalen Einbaulage eingesetzt, ist kein Werkzeug / Zusatzgriff zum Ein- und Ausbau erforderlich. Bei einer Entnahme der Filtereinheit ist ebenfalls kein Werkzeug / Zusatzgriff erforderlich, um den Wasserfilter vom Wasserventil zu lösen (entrasten, losdrehen, etc.).

Die Idee des hier vorgestellten Ansatzes beschreibt eine Filtereinheit, die in Flüssigkeitstanks mit horizontaler und vertikaler Andockung eingesetzt werden kann und in beiden Einbaulagen die optimale Performance sowie gutes Handling ohne zusätzliche Einbau- oder Positionierungshilfen bietet.

Gemäß einer Ausführungsform kann der Kanal eine rechteckige oder ovale Querschnittsfläche aufweisen. Dies bietet den Vorteil, dass die Flüssigkeit besser mit dem Filterelement in Kontakt kommt und dadurch eine bessere Filterwirkung der Flüssigkeit erzielt werden kann.

Gemäß einer weiteren Ausführungsform kann die Filtereinheit eine rechteckige oder ovale Grundfläche aufweisen. Dies bietet den Vorteil, dass die Filtereinheit horizontal und vertikal in unterschiedlichen Flüssigkeitstanks eingesetzt werden kann und dort effizient gehalten werden kann.

Ein Kanaleinlass kann gemäß einer Ausführungsform auf einer gleichen Seite der Filtereinheit ausgebildet sein, wie ein Kanalauslass. Dies bietet den Vorteil, dass selbst bei niedrigem Flüssigkeitsfüllstand im Flüssigkeitstank die Flüssigkeit in den Kanaleinlass der Filtereinheit fließen kann, unabhängig davon, ob sich die Filtereinheit horizontal oder vertikal in dem Flüssigkeitstank befindet.

Gemäß einer Ausführungsform kann ein Vorsprung zwischen dem Kanaleinlass und dem Kanalauslass ausgebildet sein wobei der Kanalauslass in einer gegenüber dem Kanaleinlass hervorstehenden Fläche ausgebildet sein kann. Dadurch, dass der Kanalauslass im Vergleich zum Kanaleinlass weiter herausragt, kann genügend Flüssigkeit in den Kanaleinlass fließen, wenn die Filtereinheit in einem Flüssigkeitstank eingesetzt ist.

Gemäß einer weiteren Ausführungsform kann der Kanaleinlass an den Vorsprung angrenzen. Dies bietet den Vorteil, dass selbst bei niedrigem Flüssigkeits- bzw. Wasserfüllstand genügend Wasser in den Kanaleinlass fließen kann. Auch kann eine sehr gute Führung der Flüssigkeit in den Kanaleinlass erreicht werden.

Der Kanalauslass kann gemäß einer Ausführungsform in einem Randbereich einer Seitenfläche der Filtereinheit angeordnet sein, insbesondere wobei der Randbereich einen äußeren Flächenanteil im Bereich von 15 bis 50 Prozent, bevorzugt 15 bis 30 Prozent der Seitenfläche umfassen kann. Dies bietet den Vorteil, dass die Filtereinheit horizontal in einen Flüssigkeitstank eingesetzt werden kann.

Der Kanaleinlass kann gemäß einer Ausführungsform nah am Kanalausalss, bevorzugt unmittelbar benachbart zum Kanalauslass der Filtereinheit angeordnet sein. Dies bietet den Vorteil, dass selbst bei niedrigem Flüssigkeits- bzw. Wasserfüllstand genügend Flüssigkeit bzw. Wasser in den Kanaleinlass fließen kann.

Der Kanal kann gemäß einer Ausführungsform ausgebildet sein, um die Flüssigkeit aus dem Kanaleinlass auf einen dem Kanaleinlass gegenüberliegenden Bereich der Filtereinheit zu leiten, wobei der Kanal ausgebildet sein kann, um von dem gegenüberliegenden Bereich der Filtereinheit Flüssigkeit mäanderförmig und/oder labyrinthförmig zum Kanalauslass zu leiten. Dies bietet den Vorteil, dass eine möglichst große Reaktionsfläche und eine möglichst lange Reaktionszeit der durchströmenden Flüssigkeit mit dem Filterelement in der Filtereinheit stattfinden kann.

Gemäß einer Ausführungsform kann ein Verlauf des Kanals im mäanderförmigen oder labyrinthförmigen Bereich im Wesentlichen parallel zu einer Öffnung des Kanaleinlasses und/oder Kanalauslasses ausgerichtet sein. Hierdurch kann eine effiziente Führung der Flüssigkeit in dem Kanal erreicht werden. Ferner kann ein zur Verfügung stehender Bauraum effizient ausgenutzt werden.

Ein Flüssigkeitstank mit einer Aussparung zur Aufnahme der Filtereinheit kann ausgeformt sein, um die Filtereinheit horizontal oder vertikal aufzunehmen. Dies bietet den Vorteil, dass die Filtereinheit von Hand eingesetzt werden kann und kein Werkzeug nötig ist. Zugleich kann eine sehr stabile Halterung der Filtereinheit im Flüssigkeitstank erreicht werden.

Gemäß einer Ausführungsform kann der Flüssigkeitstank ein Ventil aufweisen, wobei das Ventil ausgebildet ist, um eine Flüssigkeitsausgabe über den Kanalauslass der Filtereinheit zu steuern. Auf diese Weise kann eine mit technisch einfachen Mitteln eine effiziente Führung der Flüssigkeit erreicht werden.

Ein Verfahren zum Herstellen einer Filtereinheit kann die folgenden Schritte umfassen:
Bereitstellen des Filterelements mit einem zumindest teilweise labyrinthförmig oder mäanderförmig eingebetteten Kanal zum Leiten einer Flüssigkeit durch die Filtereinheit und zumindest eines Gehäuseelementes; und
Zusammenfügen des Filterelementes mit dem Gehäuseelement, um die Filtereinheit herzustellen.

Mit einem derartigen Verfahren können die hier vorgestellten Vorteile ebenfalls schnell und effizient realisiert werden.

Auch wenn der beschriebene Ansatz anhand eines Haushaltgeräts beschrieben wird, kann die hier beschriebene Filtereinheit, der Flüssigkeitstank und das Verfahren entsprechend im Zusammenhang mit einem gewerblichen oder professionellen Gerät, beispielsweise einem Gastronomiegerät eingesetzt werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine Darstellung eines Getränkezubereitungsgeräts mit einem Flüssigkeitstank gemäß einem Ausführungsbeispiel;
- Figur 2: eine Darstellung eines Getränkezubereitungsgeräts mit einem Flüssigkeitstank gemäß einem weiteren Ausführungsbeispiel;
- Figur 3: eine Darstellung einer Filtereinheit gemäß einem Ausführungsbeispiel;
- Figur 4: eine Darstellung einer Filtereinheit gemäß einem weiteren Ausführungsbeispiel;
- Figur 5: eine Darstellung eines Flüssigkeitstanks mit einer Filtereinheit gemäß einem Ausführungsbeispiel;
- Figur 6: eine Darstellung eines Flüssigkeitstanks mit einer Filtereinheit gemäß einem weiteren Ausführungsbeispiel;
- Figur 7: ein Ablaufdiagramm eines Ausführungsbeispiels eines Verfahrens zum Herstellen einer Filtereinheit gemäß einem Ausführungsbeispiel; und
- Figur 8: ein Blockschaltbild eines Ausführungsbeispiels einer Vorrichtung zum Herstellen einer Filtereinheit.

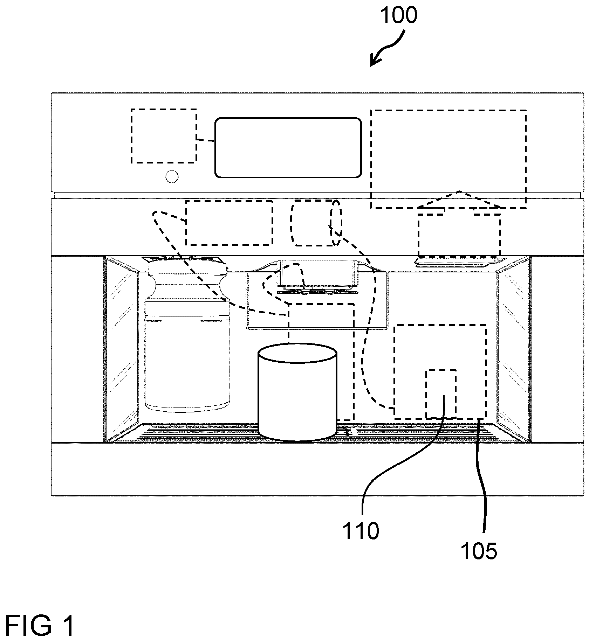

Figur 1 zeigt eine Darstellung eines Getränkezubereitungsgeräts 100 gemäß einem Ausführungsbeispiel. Bei dem Getränkezubereitungsgerät 100 kann es sich beispielsweise um einen Kaffeevollautomaten handeln. Das Getränkezubereitungsgerät 100 weist einen Flüssigkeitstank 105 auf. Der Flüssigkeitstank 105 ist ausgebildet, um eine Flüssigkeit zur Zubereitung eines Getränkes aufzunehmen. Um diese Flüssigkeit zu filtern, weist der Flüssigkeitstank 105 beispielhaft eine Filtereinheit 110 auf. Die Filtereinheit ist ausgebildet, um die Flüssigkeit in dem Flüssigkeitstank 105 zu filtern, bevor die Flüssigkeit für eine Getränkezubereitung verwendet wird. Der Flüssigkeitstank 105 weist eine Aussparung auf, um die Filtereinheit 110 aufzunehmen.

Der Flüssigkeitstank 105 ist beispielhaft ausgebildet, um in eine Aussparung im Getränkezubereitungsgerät 100 eingeschoben zu werden. Die Filtereinheit 110 ist beispielhaft horizontal in dem Flüssigkeitstank 105 angebracht. Das Einsetzen der Filtereinheit 110 in den Flüssigkeitstank 105 erfolgt beispielsweise von Hand.

Die Filtereinheit 110 weist beispielhaft ein Filterelement und einen in dem Filterelement eingebetteten Kanal auf. Das Filterelement und der Wasserweg, der hier auch als Kanal bezeichnet werden kann, sind in Figur 1 nicht dargestellt. Der Wasserweg ist zumindest teilweise labyrinthförmig oder mäanderförmig ausgeformt, um die Flüssigkeit durch die Filtereinheit 110 zu leiten.

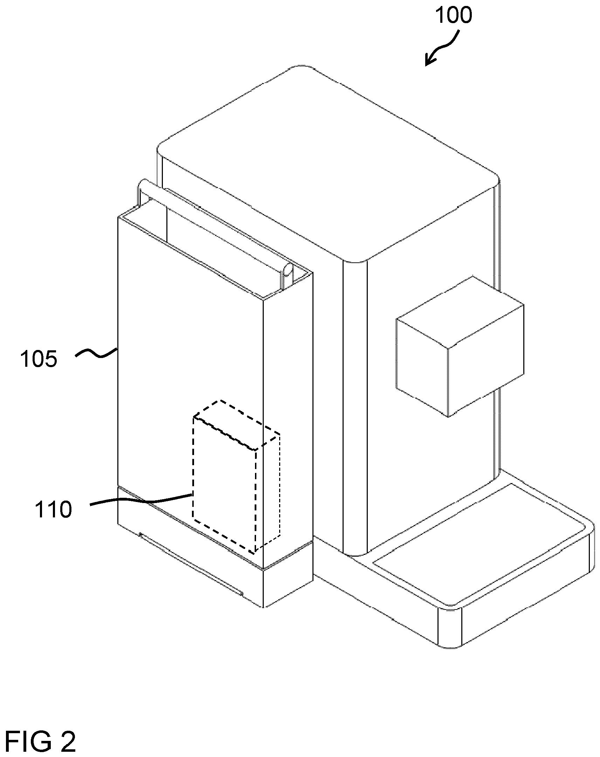

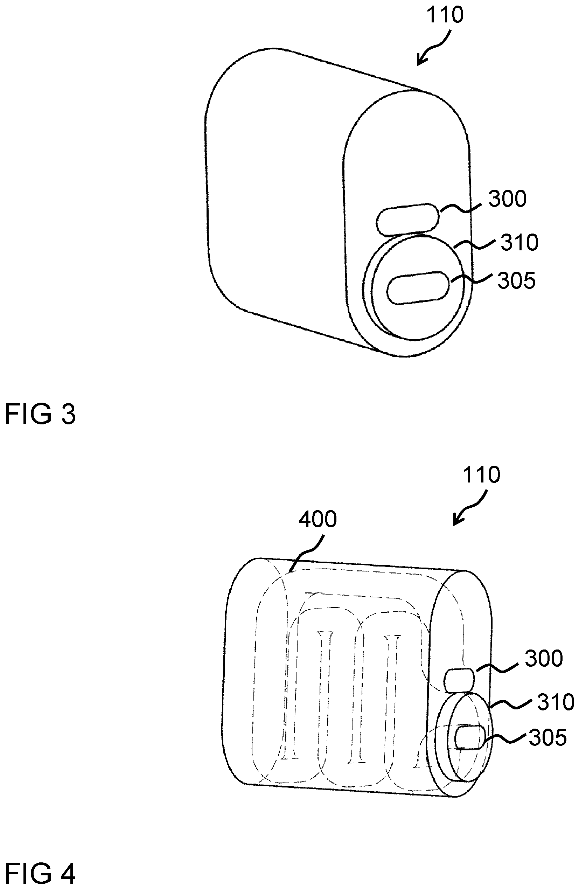

Figur 2 zeigt eine Darstellung eines Getränkezubereitungsgerätes 100 gemäß einem weiteren Ausführungsbeispiel. Bei dem Getränkezubereitungsgerät 100 kann es sich beispielsweise um einen Kaffeevollautomaten handeln. Das Getränkezubereitungsgerät 100 weist einen Flüssigkeitstank 105 auf, der seitlich an dem Getränkezubereitungsgerät 100 angebracht ist. In dem Flüssigkeitstank 105 befindet sich eine Filtereinheit 110, die vertikal in dem Flüssigkeitstank 105 angebracht ist. Bei der Filtereinheit 110 handelt es sich um die in Figur 1 beschriebene Filtereinheit 110. Die Filtereinheit ist ausgebildet um horizontal, wie in Figur 1 und vertikal, wie in Figur 2, in den Flüssigkeitstank 105 eingesetzt zu werden. Das Einsetzen der Filtereinheit 110 in den Flüssigkeitstank 105 erfolgt beispielsweise von Hand. Figur 3 zeigt eine Darstellung einer Filtereinheit 110 gemäß einem Ausführungsbeispiel. Bei der Filtereinheit 110 kann es sich um die in Figur 1 und Figur 2 beschriebene Filtereinheit 110 handeln. Die Grundfläche der Filtereinheit 110 ist beispielhaft oval ausgeformt.

Die Filtereinheit 110 weist einen Kanaleinlass 300 und einen Kanalauslass 305 auf. Der Kanaleinlass 300 und Kanalauslass 305 befinden sich beispielhaft auf der gleichen Seite der Filtereinheit 110.

Gemäß einer Ausführungsform ist ein Vorsprung 310 zwischen dem Kanaleinlass 300 und dem Kanalauslass 305 ausgebildet. Der Kanaleinlass 300 grenzt beispielhaft an den Vorsprung 310. Der Kanalauslass 305 ist beispielhaft auf dem Vorsprung 310 ausgebildet. Der Kanaleinlass 300 ist ausgebildet, um die Flüssigkeit aus dem Flüssigkeitstank in die Filtereinheit 110 zu leiten. Die Flüssigkeit wird in der Filtereinheit 110 durch den Wasserweg bzw. Kanal zu dem Kanalauslass 305 geleitet. Der Kanalauslass 305 schließt beispielhaft an ein Ventil des Getränkezubereitungsgerätes an, um die gefilterte Flüssigkeit in das Getränkezubereitungsgerät zu leiten bzw. um von einer Pumpe in das Getränkezubereitungsgerät gepumpt zu werden.

Figur 4 zeigt eine Filtereinheit 110 gemäß einem weiteren Ausführungsbeispiel. Dabei kann es sich um die in Figur 3 beschriebene Filtereinheit 110 handeln. In Figur 4 ist der Kanal 400 der Filtereinheit 110 gestrichelt dargestellt. Der Kanal 400 verläuft beispielhaft labyrinthförmig oder mäanderförmig. Der Kanal 400 ist ausgeformt, um eine Flüssigkeit durch die Filtereinheit 110 zu leiten. Der Kanal 400 weist beispielhaft eine ovale Querschnittsfläche auf.

Der Kanal 400 ist ausgebildet, um die Flüssigkeit aus dem Kanaleinlass 300 auf einen dem Kanaleinlass 300 gegenüberliegenden Bereich der Filtereinheit 110 zu leiten, wobei der Kanal 400 ausgebildet ist, um von dem gegenüberliegenden Bereich der Filtereinheit 110 Flüssigkeit mäanderförmig und/oder labyrinthförmig zum Kanalauslass 305 zu leiten. Der Verlauf des Kanals 400 im mäanderförmigen oder labyrinthförmigen Bereich ist im Wesentlichen parallel zu einer Öffnung des Kanaleinlasses 300 und Kanalauslasses 305 ausgerichtet.

Die Filtereinheit 110, die auch als Wasserfilter bezeichnet werden kann, besitzt eine rechteckige oder ovale Grundfläche. Die kompakte Bauform mit rechteckiger oder ovaler Grundfläche und geringer Höhe begünstigt den Einbau bei horizontaler wie vertikaler Andockung in unterschiedlichen Flüssigkeitstankbauformen. Auf der Grundfläche befinden sich der Vorsprung 310, der Kanalauslass 305, sowie der Kanaleinlass 300 in unmittelbarer Nähe zum Kanalauslass 305. Der Vorteil, der sich daraus ergibt, dass der Kanaleinlass 300 und der Kanalauslass 305 in der Nähe liegen ist, dass unabhängig von der Einbaulage (horizontal oder vertikal) auch bei niedrigen Füllständen sichergestellt wird, dass Flüssigkeit in den Kanaleinlass 300 der Filtereinheit 110 gelangt. In horizontaler Einbaulage befindet sich beispielsweise der Vorsprung 310 in den Flüssigkeitstanks nah am Flüssigkeitstankboden. Der Kanalauslass 305 befindet sich beispielsweise möglichst weit außermittig auf der Grundfläche der Filtereinheit 110, damit ein Einsatz in horizontaler Einbaulage begünstigt wird. Der Kanalauslass 305 ragt im Vergleich zum Kanaleinlass 300 weiter heraus. Der Vorsprung 310, der auch als Versatz bezeichnet werden kann, zwischen Kanaleinlass 300 und Kanalauslass 305 ist dadurch begründet, dass der Kanaleinlass 300 im eingebauten Zustand noch Platz benötigt, damit ausreichend Wasser einfließen kann.

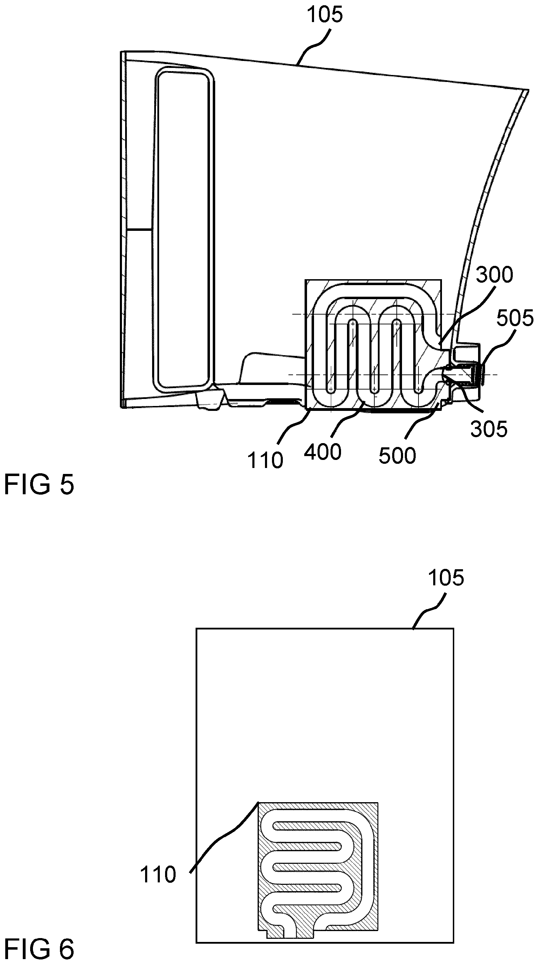

Figur 5 zeigt eine Darstellung eines Flüssigkeitstanks 105 mit einer Filtereinheit 110 gemäß einem Ausführungsbeispiel. Dabei kann es sich um den in Figur 1 beschriebenen Flüssigkeitstank 105 und die Filtereinheit 110 handeln. Die Filtereinheit 110 ist horizontal in den Flüssigkeitstank 105 eingesetzt. Zwischen dem Wasserweg 400 ist beispielhaft ein Filterelement 500 angeordnet. Der Flüssigkeitstank 105 weist beispielhaft ein Ventil 505 auf, das ausgebildet ist, um eine Flüssigkeitsausgabe über den Kanalauslass der Filtereinheit 110 zu steuern.

Aus wirtschaftlichen Gründen kann die mechanische Schnittstelle zwischen Flüssigkeitstank 105 und Getränkezubereitungsgerät auf der Geräteseite nach Möglichkeit unverändert bleiben. Die Ausführungsform des Ventils 505 entspricht dabei den üblichen Wasserventil-Systemen, die standardmäßig in Kaffeeautomaten eingesetzt werden. Der Flüssigkeitstank 105 ist um eine zusätzliche mechanische Schnittstelle zwischen Flüssigkeitstank 105 und Filtereinheit 110 erweitert. In der mechanischen Schnittstelle zwischen Flüssigkeitstank 105 und Filtereinheit 110 wird ein Element eingebracht, welches zur Sensierung der Filtereinheit im Getränkezubereitungsgerät genutzt wird (z. B. mit einem Reed-Kontakt). Die mechanische Schnittstelle zwischen Flüssigkeitstank 105 und Filtereinheit 110 ist geometrisch so gestaltet, dass ein einfaches Einsetzen und Entnehmen per Hand (Plug & Play-Prinzip) möglich ist und die Filtereinheit 110 trotzdem im laufenden Betrieb ausreichend in seiner Position gehalten wird (z. B. durch O-Ring in der Fügestelle).

Im Inneren ist die Filtereinheit 110 durch eine bestimmte Wasserführung gekennzeichnet. Über den Kanaleinlass 300 gelangt das Wasser in einen Wasserweg 400, der auch als Kanal bezeichnet werden kann, der sich entlang der inneren Gehäusewand bis zu dem Punkt mit der größten Distanz gegenüber dem Kanalauslass 305 erstreckt. Ab diesem Punkt verläuft der weitere Wasserlauf bis zum Kanalauslass 305 in labyrinth- bzw. mäander-förmigen Bahnen. Die Mäanderform wird durch möglichst viele Schikanen realisiert, in denen sich das Filterelement 500, das auch als Filtermedium / Filtermaterial bezeichnet werden kann, befindet. Der Vorteil dieser Wasserführung ist eine möglichst große Reaktionsfläche und möglichst lange Reaktionszeit des durchströmenden Wassers mit dem Filterelement 500 in der Filtereinheit 110. Um die Kontaktfläche des Wassers mit dem Filterelement 500 noch weiter zu begünstigen, ist ein ovaler Querschnitt der Wasserwege 400 denkbar. Um die Wasserströmung zu begünstigen, werden vor allem in den richtungsumlenkenden Bereichen möglichst große Radien in den Wasserwegen 400 vorgesehen.

Die Filtereinheit 110 wird vertikal oder alternativ horizontal in den Flüssigkeitstank 105 eingesetzt. Optimale Filterwirkung ist in beiden Lagen gegeben aufgrund der inneren Wasserführung. Die Filtereinheit 110 ist somit in Standgeräten (vertikaler Einsatz) und in Einbaugeräten mit schubladenartigem Flüssigkeitstank (horizontaler Einsatz) einsetzbar. Für verschiedene Getränkebereiter ist ein einziger Filtertyp verwendbar.

Figur 6 zeigt eine Darstellung eines Flüssigkeitstanks 105 mit einer Filtereinheit 110 gemäß einem weiteren Ausführungsbeispiel. Dabei kann es sich um den in Figur 2 beschriebenen Flüssigkeitstank 105 und die Filtereinheit 110 handeln. Die Filtereinheit 110 ist hier vertikal in den Flüssigkeitstank 105 eingesetzt.

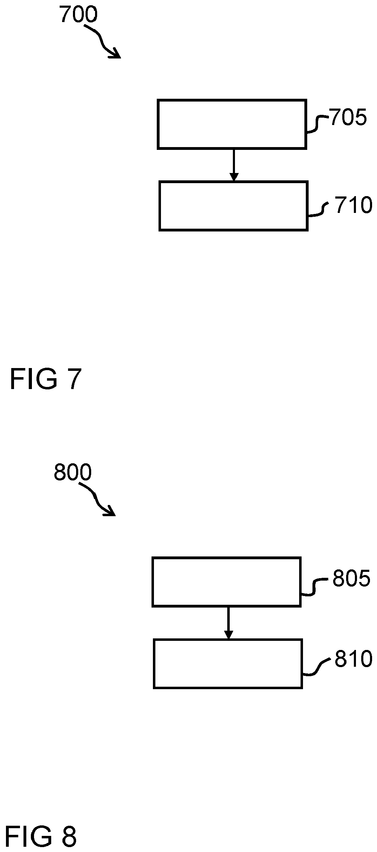

Figur 7 zeigt ein Ablaufdiagramm eines Ausführungsbeispiels eines Verfahrens 700 zum Herstellen einer Filtereinheit.

Das Verfahren umfasst einen Schritt 705 des Bereitstellens des Filterelements mit einem zumindest teilweise labyrinthförmig oder mäanderförmig eingebetteten Kanal zum Leiten einer Flüssigkeit durch die Filtereinheit und zumindest eines Gehäuseelementes. Ferner umfasst das Verfahren 700 einen Schritt 710 des Zusammenfügens des Filterelementes mit dem Gehäuseelement, um die Filtereinheit herzustellen.

Eine Ausführungsform der Filtereinheit ist ein zweischaliges Gehäuse. Dabei sind die Schalen entweder spiegelsymmetrisch gestaltet oder eine Schale enthält die Ausformung der Wasserwege und die andere Schalte ist eher als flacher Deckel ausgelegt. Beide Hälften werden wasserdicht miteinander gefügt, z. B. durch Verkleben oder Vibrationsschweißen.

Figur 8 zeigt ein Blockschaltbild eines Ausführungsbeispiels einer Vorrichtung 800 zum Herstellen einer Filtereinheit. Die Vorrichtung 800 umfasst eine Einheit 805 zum Bereitstellen des Filterelements mit einem zumindest teilweise labyrinthförmig oder mäanderförmig eingebetteten Kanal zum Leiten einer Flüssigkeit durch die Filtereinheit und zumindest eines Gehäuseelementes. Ferner umfasst die Vorrichtung 800 eine Einheit 810 zum Zusammenfügen des Filterelementes mit dem Gehäuseelement, um die Filtereinheit herzustellen.

## Patentansprüche

1. Filtereinheit (110) zum Einsetzen in eine Aussparung eines Flüssigkeitstanks (105), wobei die Filtereinheit (110) die folgenden Merkmale aufweist:
ein Filterelement (500); und
einen in dem Filterelement (500) zumindest teilweise labyrinthförmig oder mäanderförmig eingebetteten Kanal (400) zum Leiten einer Flüssigkeit durch die Filtereinheit (110).

2. Filtereinheit (110) gemäß Anspruch 1, wobei der Kanal (400) eine kreisförmige, rechteckige oder ovale Querschnittsfläche aufweist.

3. Filtereinheit (110) gemäß einem der vorangegangenen Ansprüche, wobei die Filtereinheit (110) eine rechteckige oder ovale Grundfläche aufweist.

4. Filtereinheit (110) gemäß einem der vorangegangenen Ansprüche, wobei ein Kanaleinlass (300) des Kanals (400) auf einer gleichen Seite der Filtereinheit (110) ausgebildet ist, wie ein Kanalauslass (305) des Kanals (400).

5. Filtereinheit (110) gemäß einem der vorangegangenen Ansprüche, wobei ein Vorsprung (310) zwischen dem Kanaleinlass (300) und dem Kanalauslass (305) ausgebildet ist und/oder wobei der Kanalauslass (305) in einer gegenüber dem Kanaleinlass (300) hervorstehenden Fläche ausgebildet ist.

6. Filtereinheit (110) gemäß Anspruch 5, wobei der Kanaleinlass (300) an den Vorsprung (310) angrenzt.

7. Filtereinheit (110) gemäß einem der vorangegangenen Ansprüche, wobei der Kanalauslass (305) in einem Randbereich einer Seitenfläche der Filtereinheit (110) angeordnet ist, insbesondere wobei der Randbereich einen äußeren Flächenanteil im Bereich von 15 bis 50 Prozent, bevorzugt 15 bis 30 Prozent der Seitenfläche umfasst.

8. Filtereinheit (110) gemäß einem der vorangegangenen Ansprüche, wobei der Kanaleinlass (300) nah an dem Kanalauslass (305), bevorzugt unmittelbar benachbart zum Kanalauslass (305) der Filtereinheit (110) angeordnet ist.

9. Filtereinheit (110) gemäß einem der vorangegangenen Ansprüche, wobei der Kanal (400) ausgebildet ist, um die Flüssigkeit aus dem Kanaleinlass (300) auf einen dem Kanaleinlass (300) gegenüberliegenden Bereich der Filtereinheit (110) zu leiten, wobei der Kanal (400) ausgebildet ist, um von dem gegenüberliegenden Bereich der Filtereinheit (110) Flüssigkeit mäanderförmig und/oder labyrinthförmig zum Kanalauslass (305) zu leiten.

10. Filtereinheit (110) gemäß einem der vorangegangenen Ansprüche, wobei ein Verlauf des Kanals (400) im mäanderförmigen oder labyrinthförmigen Bereich im Wesentlichen parallel zu einer Öffnung des Kanaleinlasses (300) und/oder Kanalauslasses (305) ausgerichtet ist.

11. Flüssigkeitstank (105) mit einer Aussparung zur Aufnahme der Filtereinheit (110) gemäß einem der vorangegangenen Ansprüche 1 bis 10, wobei der Flüssigkeitstank (105) ausgeformt ist, um die Filtereinheit (110) horizontal oder vertikal bezüglich einer Grundfläche der Filtereinheit (110) aufzunehmen.

12. Flüssigkeitstank (105) gemäß Anspruch 11, mit einem Ventil (505), wobei das Ventil (505) ausgebildet ist, um eine Flüssigkeitsausgabe über den Kanalauslass (305) der Filtereinheit (110) zu steuern.

13. Verfahren (700) zum Herstellen einer Filtereinheit (110) gemäß einem der vorangegangenen Ansprüche, wobei das Verfahren (700) die folgenden Schritte umfasst:
Bereitstellen (705) des Filterelements (500) mit einem zumindest teilweise labyrinthförmig oder mäanderförmig eingebetteten Kanal (400) zum Leiten einer Flüssigkeit durch die Filtereinheit (110) und zumindest eines Gehäuseelementes;
Zusammenfügen (710) des Filterelementes (500) mit dem Gehäuseelement, um die Filtereinheit (110) gemäß einem der vorangegangenen Ansprüche herzustellen.

14. Vorrichtung (800), die ausgebildet ist, um die Schritte (705, 710) des Verfahrens (700) gemäß einem der vorangegangenen Ansprüche in entsprechenden Einheiten (805, 810) auszuführen und/oder anzusteuern.

15. Computer-Programmprodukt mit Programmcode zur Durchführung des Verfahrens (700) nach einem der vorangegangenen Ansprüche, wenn das Computer-Programmprodukt auf einer Vorrichtung (800) ausgeführt wird.
